# EUROPÄISCHE PATENTSCHRIFT

(11) **EP 3 690 353 B1**
(45) Veröffentlichungstag und Bekanntmachung des Hinweises auf die Patenterteilung: **07.12.2022**
(21) Anmeldenummer: 20154222.2
(22) Anmeldetag: 29.01.2020
(51) Int. Cl.: F25B 15/00, B60H 1/00, F25B 49/04, F28D 20/00, F25B 17/08, F25B 15/09, F25B 17/12

(54) **VERFAHREN ZUM BETREIBEN EINER THERMOREGULIERUNGSANORDNUNG, THERMOREGULIERUNGSANORDNUNG UND FAHRZEUG**
METHOD FOR OPERATING A THERMOREGULATING DEVICE, THERMOREGULATING ASSEMBLY AND VEHICLE
PROCÉDÉ DE FONCTIONNEMENT D'UN AGENCEMENT DE RÉGULATION THERMIQUE, AGENCEMENT DE RÉGULATION THERMIQUE ET VÉHICULE

(30) Priorität: 30.01.2019 DE 102019102270
(43) Veröffentlichungstag der Anmeldung: 05.08.2020
(73) Patentinhaber: Deutsches Zentrum für Luft- und Raumfahrt e.V., 51147 Köln (DE)
(72) Erfinder: WECKERLE, Christoph, 73326 Deggingen (DE); BÜRGER, Inga, 70563 Stuttgart (DE); LINDER, Marc Philipp, 70199 Stuttgart (DE); KURZ, Christoph, 70619 Stuttgart (DE); HEGNER, Robert, 70771 Leinfelden-Echterdingen (DE); DITTUS, Holger, 75397 Simmozheim (DE)
(74) Vertreter: Fleck, Julia Maria

(56) Entgegenhaltungen:
- DE-A1- 4 025 421
- DE-T5-112014 005 908
- JP-A- S62 255 760
- MARC LINDER ET AL: "An energy-efficient air-conditioning system for hydrogen driven cars", INTERNATIONAL JOURNAL OF HYDROGEN ENERGY, ELSEVIER SCIENCE PUBLISHERS B.V., BARKING, GB, Bd. 36, Nr. 4, 25. November 2010 (2010-11-25), Seiten 3215-3221, XP028140491, ISSN: 0360-3199, DOI: 10.1016/J.IJHYDENE.2010.11.101 [gefunden am 2010-12-06]

## Beschreibung

Die Erfindung betrifft ein Verfahren zum Betreiben einer Thermoregulierungsanordnung zur Temperierung (thermischen Regulierung) eines mit der Thermoregulierungsanordnung in thermischem Kontakt stehenden Systems, das insbesondere innerhalb eines Fahrzeugs angeordnet ist, bei dem in einem Reaktionsgassystem Reaktionsgas von einer Reaktionsgasquelle unter Zwischenschaltung einer Temperieranordnung in eine Reaktionsgassenke geleitet wird, wobei in der in dem Reaktionsgassystem angeordneten Temperieranordnung in zumindest einer Reaktorvorrichtung mit Reaktionsmaterial in einem Absorptionsbetrieb Wärme und anschließend in einem Desorptionsbetrieb Kälte erzeugt wird oder umgekehrt, wobei in dem Absorptionsbetrieb Reaktionsgas von dem Reaktionsmaterial unter Wärmeabgabe absorbiert wird und in dem Desorptionsbetrieb Reaktionsgas von dem Reaktionsmaterial unter Wärmeaufnahme desorbiert wird, und wobei die zumindest eine Reaktorvorrichtung von einem Wärmeträgermedium zur Aufnahme der erzeugten Wärme oder Kälte durchströmt wird wobei im Desorptionsbetrieb ein erster Wärmeträgerkreislauf und im Absorptionsbetrieb ein zweiter Wärmeträgerkreislauf, mit einer anderen, vorzugsweise höheren, Austrittstemperatur des Wärmeträgermediums aus der Reaktorvorrichtung als in dem ersten Wärmeträgerkreislauf, mit der Reaktorvorrichtung in Strömungsverbindung steht. Die Erfindung betrifft ferner eine Thermoregulierungsanordnung und ein Fahrzeug mit derselben.

Im Rahmen der Elektromobilität stellt die Fahrzeuginnenraumklimatisierung eine erhebliche Herausforderung dar. Zum einen wird durch den Einsatz konventionell elektrisch betriebener Klimaanlagen die Reichweite des Fahrzeugs um etwa 35 % bis 50 % reduziert. Zum anderen erfordern derartige Klimaanlagen den Einsatz unterschiedlicher und teilweise giftiger Kältemittel. Daher besteht Bedarf an alternativen Klimatisierungstechnologien, die gegebenenfalls auch in konventionellen Verbrennungsmotoren einsetzbar sind.

Einen vielversprechenden Ansatz stellt die Verwendung thermochemischer Gas-Feststoff-Reaktionssysteme (kurz "Reaktionssysteme") dar, wobei ein Reaktionsgas in einer exothermen, d. h. Wärme freisetzenden Reaktion reversibel an einen Feststoff als Reaktionsmaterial gebunden wird (Absorption). In der endothermen Rückreaktion unter Freisetzung des Reaktionsgases (Desorption) und Wärmeaufnahme aus der Umgebung ist Kälte erzeugbar. Als Materialpaarungen des Reaktionssystems sind beispielsweise Wasserstoff als Reaktionsgas und ein Metall als Feststoff geeignet, wobei in beladenem Zustand ein Metallhydrid entsteht. Der Antrieb dieser Systeme erfolgt bei den sogenannten geschlossenen Systemen durch eine Wärmequelle und bei den sogenannten offenen Systemen durch eine Druckdifferenz in der Reaktionsgas-Versorgung.

Ein Verfahren und eine Thermoregulierungsanordnung der eingangs genannten Art sind aus der DE 10 2014 109 580 B3 bekannt. Hierbei wird ein geschlossenes System innerhalb der Thermoregulierungsanordnung verwendet.

In der Veröffentlichung "Linder M, Kulenovic R, An energy-efficient air-conditioning system for hydrogen driven cars, Int. J Hydrogen Energy 2011, 36: 3215-3221" ist ein Versuchsaufbau mit Untersuchungen zu einer Klimaanlage zur Kälteerzeugung zum Einsatz in einem offenen System angegeben.

Die DE 11 2014 005 908 T5 zeigt einen Adsorber und eine Adsorptionskühlvorrichtung mit mehreren Adsorbern und einer Schaltvorrichtung, die zwischen einem Adsorber, der einen Adsorptionsbetrieb ausführt, und einem Adsorber, der einen Desorptionsbetrieb ausführt, umschaltet, wobei zwischen dem Adsorptionsbetrieb und dem Desorptionsbetrieb eine Schaltzeit festgelegt ist.

Der Erfindung liegt die Aufgabe zugrunde, ein effizienzerhöhendes Verfahren zum Betreiben einer Thermoregulierungsanordnung bereitzustellen, sowie eine entsprechend betreibbare Thermoregulierungsanordnung und ein Fahrzeug mit derselben.

Die Aufgabe wird für das Verfahren mit den Merkmalen des Anspruchs 1 gelöst. Dabei ist vorgesehen, dass bei einem Wechsel von dem Absorptionsbetrieb auf den Desorptionsbetrieb oder umgekehrt die Strömungsverbindung der Reaktorvorrichtung mit dem zweiten Wärmeträgerkreislauf auf den ersten Wärmeträgerkreislauf umgeschaltet wird oder umgekehrt, wobei zunächst eine Strömungsverbindung stromauf der Reaktorvorrichtung auf den anderen Wärmeträgerkreislauf umgeschaltet wird und nach einer Umschaltzeit (einer Dauer des Umschaltevorgangs) die Strömungsverbindung stromab der Reaktorvorrichtung auf diesen anderen Wärmeträgerkreislauf umgeschaltet wird, wobei die Umschaltzeit in Abhängigkeit einer Durchströmzeit des Wärmeträgermediums durch zumindest die Reaktorvorrichtung ermittelt wird. Zur Steuerung dieses Verfahrens umfasst die Thermoregulierungsanordnung eine entsprechend ausgebildete Steuereinrichtung

So erfolgen die Umschaltungen der Strömungsverbindungen stromauf und stromab der Reaktorvorrichtung nicht zeitgleich, sondern mit einem Zeitversatz entsprechend der Umschaltzeit. Eine derartige asynchrone Umschaltung bewirkt, dass noch in der Reaktorvorrichtung vorhandenes Restvolumen an Wärmeträgermedium in den unmittelbar vor dem Wechsel mit der Reaktorvorrichtung gekoppelten Wärmeträgerkreislauf abströmen kann. So wird verhindert, dass das Restvolumen in den anschließend an den Wechsel gekoppelten Wärmeträgerkreislauf strömt, welcher in der Regel einen anderen Temperaturbereich, zumindest eine andere Austrittstemperatur, aufweist. Ein Eintritt von Wärmeträgermedium in den jeweils anderen Wärmeträgerkreislauf, mit einem anderen Temperaturniveau, und ein damit verbundener unerwünschter Wärme- oder "Kälte"-verlust lässt sich auf diese Weise vermeiden. Zudem kann die zunächst in der Reaktormasse gespeicherte Wärme das Restvolumen an Wärmeträgermedium weiter wärmen bzw. kühlen, so dass eine Art Wärmerückgewinnung stattfinden kann. Untersuchungen der Erfinder haben gezeigt, dass so die Effizienz des Systems und damit die erbrachte thermische Leistung vorteilhaft deutlich erhöht werden kann.

In einer bevorzugten Ausführungsvariante des Verfahrens entspricht die Umschaltzeit (zumindest im Wesentlichen, zum Beispiel unter Berücksichtigung von Toleranzzeiten) der Durchströmzeit. Besonders vorteilhaft wird die Umschaltzeit in Abhängigkeit einer Durchströmzeit des Wärmeträgermediums eines zu durchströmenden Volumens ausgehend von einer stromauf der Reaktorvorrichtung angeordneten Kopplungsstelle (z. B. gebildet durch ein erstes Ventilmittel) bis zu einer stromab angeordneten Kopplungsstelle (z. B. gebildet durch ein zweites Ventilmittel) der Reaktorvorrichtung zur Strömungsverbindung mit dem Wärmeträgerkreislauf ermittelt. Dementsprechend kann, je nach Volumen der Reaktorvorrichtung (seitens des Wärmeträgermediums) und/oder gegebenenfalls dem Gesamtvolumen zwischen den Kopplungsstellen, und Durchflussgeschwindigkeit des Wärmeträgermediums, die Umschaltzeit bestimmt und in eine Steuerung durch eine Steuereinrichtung der Thermoregulierungsanordnung implementiert werden. Auf diese Weise kann mit guter Genauigkeit sichergestellt werden, dass das Restvolumen dem entsprechend temperierten Wärmeträgerkreislauf zugeführt wird, was der Effizienz des Verfahrens zuträglich ist.

Insbesondere bei einem offenen System, das zyklisch betrieben wird, ist es vorteilhaft, wenn während der Umschaltzeit die Strömung des Reaktionsgases durch die Reaktorvorrichtung unterbrochen wird, z. B. durch Unterbrechung der Strömungsverbindung von Reaktionsgas zu der Reaktorvorrichtung (oder von der Reaktorvorrichtung). Auf diese Weise kann die Absorption (oder die Desorption) des Reaktionsgases unterbrochen werden. So wird verhindert, dass das warme bzw. kalte Restvolumen unerwünschter Weise mit dann erzeugter Kälte bzw. Wärme beaufschlagt wird.

In einer bevorzugten Ausführungsvariante werden bei dem Wechsel in den Wärmeträgerkreisläufen vorhandene Ventilmittel zumindest teilweise mit der Umschaltzeit versetzt zueinander umgeschaltet, wobei zunächst ein erstes Ventilmittel stromauf der Reaktorvorrichtungen umgeschaltet wird und nach der Umschaltzeit ein zweites Ventilmittel stromab der Reaktorvorrichtungen umgeschaltet wird. Die Ventilmittel, insbesondere Wegeventile, erlauben ein einfach steuerbares bzw. regelbares Umschalten der Strömungsverbindung.

Vorzugsweise wird der Wechsel zwischen dem Absorptionsbetrieb und dem Desorptionsbetrieb in Abhängigkeit von Betriebsgrößen, insbesondere eines (Betriebs-) Drucks und/oder einer Temperatur eingeleitet (gesteuert und/oder geregelt), wobei ein anderer Betriebsdruck an die Reaktorvorrichtung angelegt wird. Die Temperatur kann zum Beispiel eine Temperaturdifferenz über eine bestimmte Zeitspanne in dem Wärmeträgermedium oder in dem Reaktionsmaterial sein. Die Einstellung erfolgt vorzugsweise mittels einer Steuereinrichtung der Thermoregulierungsanordnung, die auch einem (übergeordneten) Steuergerät zugeordnet sein kann. Der Betriebsdruck der Reaktorvorrichtung entspricht einem über das Reaktionsgassystem angelegten Druck. Durch die erzeugte Druckdifferenz an der Reaktorvorrichtung ergibt sich die Triebkraft des Absorptionsbetriebs bzw. Desorptionsbetriebs. So ist die Thermoregulierungsanordnung präzise steuerbar bzw. regelbar.

Vorzugsweise wird der jeweilige Betriebsdruck in der (bzw. angelegt an die) Reaktorvorrichtung und/oder die Reaktionsgas-Massenströme zu bzw. von der Reaktorvorrichtung in Abhängigkeit von Randbedingungen (insbesondere einer erforderlichen Temperatur des Wärmeträgermediums entsprechend dessen Verwendungszweck, beispielsweise zur Klimatisierung) und/oder einer erforderlichen thermischen Leistung eingestellt. Die Betriebsdrücke liegen insbesondere zwischen einem durch die Reaktionsgasquelle, beispielsweise einer Speichereinrichtung, bereitgestellten Druck und einem durch die Reaktionsgassenke, beispielsweise eine Energiewandeleinrichtung, bereitgestellten Druck. Zur Einstellung ist vorzugsweise, neben der Steuereinrichtung, eine entsprechende Einrichtung in Leitungsmitteln des Reaktionsgassystems vorhanden. Auf diese Weise wird ein Verfahren bereitgestellt, mittels dessen flexibel auf unterschiedliche Umgebungsbedingungen reagiert werden kann.

In einer besonders effizienten Betriebsweise sind zumindest zwei Reaktorvorrichtungen vorhanden, die zyklisch zueinander versetzt wechselweise im Absorptionsbetrieb und im Desorptionsbetrieb betrieben werden. Auf diese Weise kann kontinuierlich Kälte bzw. Wärme bereitgestellt werden, die einmal von der einen und, nach dem Wechsel, anschließend von der anderen Reaktorvorrichtung abgenommen wird.

Dabei wird in einem Halbzyklus eine der Reaktorvorrichtungen im Absorptionsbetrieb betrieben, wobei Reaktionsgas aus der Reaktionsgasquelle (z. B. der Speichereinrichtung) zur Absorption in die jeweilige Reaktorvorrichtung geleitet wird und die abgegebene Wärme von dem Wärmeträgermedium aufgenommen wird. Die jeweils andere Reaktorvorrichtung wird im Desorptionsbetrieb betrieben, wobei Reaktionsgas aus der Reaktorvorrichtung in die Reaktionsgassenke (beispielsweise eine Energiewandeleinrichtung) geleitet wird, wobei Wärme aus dem Wärmeträgermedium aufgenommen und so das Wärmeträgermedium abgekühlt wird. Nach einer Halbzykluszeit werden zum Wechsel die Strömungsverbindungen des Reaktionsgases und/oder des Wärmeträgermediums umgeschaltet und anschließend in dem anderen Halbzyklus die jeweils anderen Reaktorvorrichtungen im Absorptionsbetrieb und im Desorptionsbetrieb betrieben. Die Halbzykluszeit ist abhängig von der Auslegung der Thermoregulierungsanordnung und den Betriebsparametern und kann z. B. 30 s bis 300 s, beispielsweise 60 s bis 180 s betragen. Bei einer derartigen Betriebsweise, die eine kontinuierliche Wärme- bzw. Kältebereitstellung ermöglicht, trägt das erfindungsgemäße Verfahren aufgrund der vergleichsweise häufigen Wechsel besonders zur Effizienzsteigerung bei.

Die Aufgabe bezüglich der Thermoregulierungsanordnung wird mit den Merkmalen des Anspruchs 9 gelöst. Vorteilhafte Ausgestaltungen sind sinngemäß in Zusammenhang mit den vorstehend beschriebenen Ausführungsvarianten des Verfahrens angegeben.

In einer vorteilhaften Ausgestaltungsvariante der Thermoregulierungsanordnung umfasst das Reaktionsmaterial einen Feststoff aufweisend ein Metallhydrid, insbesondere eine Titan-Mangan-Legierung und/oder ist das Reaktionsgas durch Wasserstoff gebildet. Durch Wasserstoff als Reaktionsgas kann eine hohe Leistungsdichte und eine schnelle Reaktionszeit erreicht werden. Für die Anwendung einer Fahrzeugklimatisierung vorteilhafte Temperaturniveaus ergeben sich durch die Verwendung einer Titan-Mangan-Legierung in Kombination mit Wasserstoff.

Die Aufgabe bezüglich des Fahrzeuges wird mit den Merkmalen des Anspruchs 11 gelöst. Das Fahrzeug umfasst neben der Thermoregulierungsanordnung zumindest ein damit in thermischem Kontakt stehendes zu temperierendes System. Dies kann ein Wärmetauscher zur Klimatisierung eines Fahrzeuginnenraums und/oder eines anderen (Kühl-) Raums des Fahrzeugs sein und/oder Leistungselektronik, eine Komponente des Antriebssystems und/oder ein anderes zu temperierendes bzw. thermisch zu regulierendes System innerhalb des Fahrzeugs.

Nachfolgend wird die Erfindung anhand von Ausführungsbeispielen unter Bezugnahme auf die Zeichnungen näher erläutert. Es zeigen:
- Fig. 1: ein Fließschema einer beispielhaften Thermoregulierungsanordnung, die zum Betrieb mit dem erfindungsgemäßen Verfahren ausgebildet ist, mit zwei Reaktorvorrichtungen, und
- Fig. 2A-C: Fließschemata mit zwei Reaktorvorrichtungen zur schematischen Veranschaulichung eines Wechsels.

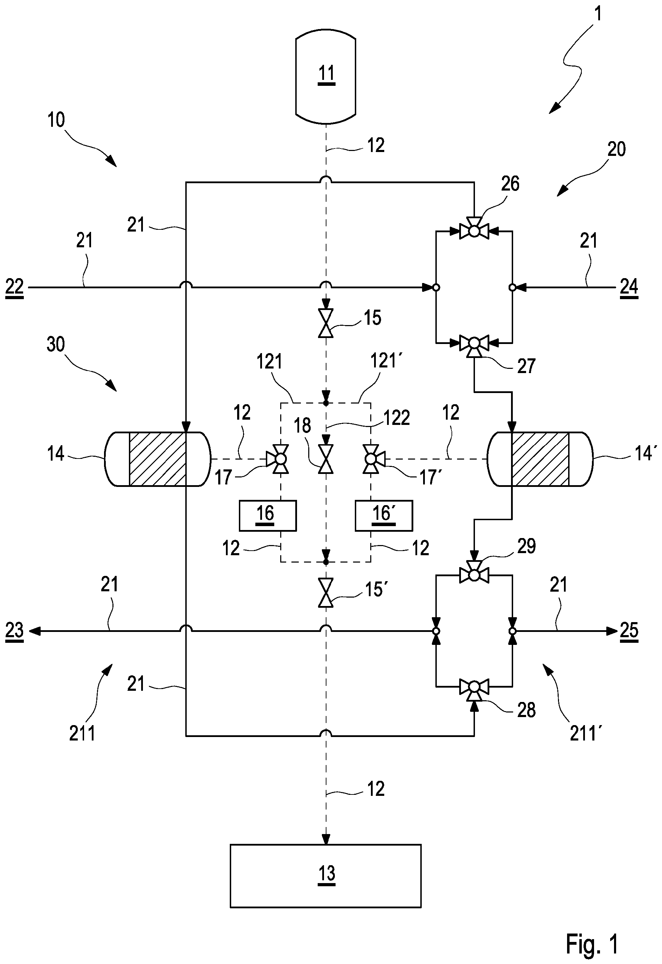

Fig. 1 zeigt ein Fließschema einer Thermoregulierungsanordnung 1 zur Temperaturregulierung eines oder mehrerer damit in thermischem Kontakt stehender Systeme (hier nicht gezeigt). Die Thermoregulierungsanordnung 1 und die Systeme können beispielsweise innerhalb eines Fahrzeugs angeordnet sein. Bei den Systemen kann es sich z.B. um einen Fahrzeuginnenraum, um Leistungselektronik eines Fahrzeuges, Energieerzeugungsaggregate wie eine Brennstoffzelle und/oder einen Verbrennungsmotor und/oder eine Energiespeicheranordnung wie beispielsweise eine Batterieanordnung handeln. Die Systeme können als Wärmequelle und/oder als Wärmesenke dienen, was sich je nach System in Abhängigkeit von Randbedingungen, z. B. von der Umgebungstemperatur, ändern kann. Bei einem reinen Kältebetrieb der Thermoregulierungsanordnung, zur Abkühlung eines Systems, kann die Umgebung als Wärmesenke dienen.

Das Fahrzeug kann insbesondere einen Brennstoffzellenantrieb aufweisen, als alleiniges Antriebsaggregat oder in Kombination mit z. B. einem Elektro- und/oder Verbrennungsmotor als Hybridvariante. Das Fahrzeug umfasst ein Reaktionsgassystem 10 mit einer Reaktionsgasquelle 11 für Reaktionsgas, insbesondere Wasserstoff, und eine Reaktionsgassenke 13. Die Reaktionsgasquelle 11 kann insbesondere von einer Speichereinrichtung gebildet sein. Die Reaktionsgassenke 13 kann insbesondere von einer mit Reaktionsgas betriebenen Energiewandeleinrichtung gebildet sein. Die Reaktionsgassenke 13 steht mittelbar oder unmittelbar (d.h. gegebenenfalls unter Zwischenschaltung zumindest einer Reaktorvorrichtung 14, 14'), über Leitungsmittel 12 mit der Reaktionsgasquelle 11 in Strömungsverbindung und wird aus der Reaktionsgasquelle 11 mit Reaktionsgas versorgt. In der Reaktionsgassenke 13 wird die in dem Reaktionsgas gespeicherte Energie in eine andere Energieform umgesetzt. Bei der Reaktionsgassenke 13 kann es sich insbesondere um eine Brennstoffzelle handeln.

Die Thermoregulierungsanordnung 1 umfasst vorzugsweise Teile der in dem Fahrzeug vorhandenen (Antriebs-)Peripherie, insbesondere das Reaktionsgassystem 10 mit der Reaktionsgasquelle 11 und der Reaktionsgassenke 13. In das Reaktionsgassystem 10 ist strömungsmechanisch eine Temperieranordnung 30 der Thermoregulierungsanordnung 1 eingebunden, die basierend auf dem Prinzip der thermochemischen Reaktion (bzw. Sorption), insbesondere Absorption und Desorption, Wärme und/oder Kälte erzeugen kann. Zur Wärmeabgabe bzw. Wärmefreisetzung wird dabei das Reaktionsgas in einer exothermen Reaktion reversibel an das Reaktionsmaterial als Speichermaterial gebunden (Absorption). Zur Wärmeaufnahme bzw. "Kältefreisetzung" wird das Reaktionsgas in der endothermen Rückreaktion aus dem Reaktionsmaterial freigesetzt (Desorption). Der Beladungszustand des Feststoffes ist an ein bestimmtes Temperatur- und Druckniveau gekoppelt, welches sich im Gleichgewicht einstellt. Dieses wiederum ist abhängig von dem jeweiligen Reaktionssystem, d. h. dem verwendeten Reaktionsgas und Feststoff bzw. Reaktionsmaterial.

Die Temperieranordnung 30 weist beispielhaft zwei Reaktorvorrichtungen 14, 14' auf, die jeweils mit Reaktionsmaterial gefüllt sind. Das Reaktionsmaterial ist vorzugsweise durch einen Feststoff gebildet und umfasst bevorzugt Metallhydrid. Das Reaktionsmaterial, insbesondere Metallhydrid, und das Reaktionsgas, insbesondere Wasserstoff, bilden komplementäre Bestandteile des thermochemischen Reaktions-, insbesondere Sorptionssystems. Die Verwendung von Wasserstoff als Reaktionsgas bietet den Vorteil einer hohen Leistungsdichte. Als Feststoffe sind, insbesondere in Verbindung mit Wasserstoff, Titan-Mangan-Legierungen für die Anwendung in der Thermoregulierungsanordnung 1 besonders geeignet, insbesondere aufgrund der für den Anwendungsfall geeigneten Druck-Temperatur-Korrelationen bei Absorption und Desorption.

Die Temperieranordnung 30 mit den Reaktorvorrichtungen 14, 14' ist innerhalb der Leitungsmittel 12 zwischen der Reaktionsgasquelle 11 und der Reaktionsgassenke 13 angeordnet. In den Leitungsmitteln 12 ist eine Ventilanordnung vorhanden, mittels derer die Strömungswege des Reaktionsgases über die Leitungsmittel 12 steuerbar sind. Insbesondere können die Reaktorvorrichtungen 14, 14' einzeln oder gleichzeitig mit dem Reaktionsgas aus der Reaktionsgasquelle 11 versorgt werden. Weiterhin kann aus einer oder beiden Reaktorvorrichtungen 14, 14' Reaktionsgas über die Leitungsmittel 12 der Reaktionsgassenke 13 zugeführt werden.

Dabei sind hier beispielhaft die Leitungsmittel 12 ausgehend von der Reaktionsgasquelle 11 zunächst als ein einziger Leitungsstrang ausgebildet. Dieser Leitungsstrang teilt sich in zwei parallele Teilleitungsstränge 121, 121' zur Versorgung der jeweiligen Reaktorvorrichtungen 14, 14' auf. Für eine Umschaltbarkeit der Strömungswege bzw. Strömungsverbindungen sind in den Teilleitungssträngen 121, 121' jeweils Ventilmittel 17, 17' der Ventilanordnung, z. B. 3/2-Wegeventile, angeordnet, über die die Teilleitungsstränge 121, 121' jeweils mit den Reaktorvorrichtungen 14, 14' verbunden werden können. Je nach Ventilstellung kann dabei eine Strömungsverbindung der jeweiligen Reaktorvorrichtung 14, 14' zu der Reaktionsgasquelle 11 oder zu der Reaktionsgassenke 13 hergestellt werden.

Parallel zu den Teilleitungssträngen 121, 121' ist ein Bypassabschnitt 122 der Leitungsmittel 12 mit einem Bypassventilmittel 18 der Ventilanordnung vorhanden. Über den Bypassabschnitt 122 kann das Reaktionsgas unmittelbar, d.h. ohne Zwischenschaltung der Reaktorvorrichtungen 14, 14', von der Reaktionsgasquelle 11 zu der Reaktionsgassenke 13 strömen. So kann Reaktionsgas zusätzlich oder ausschließlich über den Bypassabschnitt 122 zu der Reaktionsgassenke 13 geführt werden. Dies kann beispielsweise bei einem hohen Reaktionsgasbedarf der Reaktionsgassenke 13, beispielsweise bei einem hohen Leistungsbedarf des Fahrzeuges, vorteilhaft sein, oder in einem Betriebsmodus der Temperieranordnung 30, wobei der Reaktionsgassenke 13 kein Reaktionsgas aus den Reaktorvorrichtungen 14, 14' zugeführt wird.

In vollständig gefülltem Zustand weist die Reaktionsgasquelle 11 vorzugsweise einen hohen Druck von z. B. mehr als 100 bar auf, um eine hohe Masse an Reaktionsgas aufnehmen zu können. Die Reaktionsgassenke 13 hingegen weist einen bedeutend niedrigeren Arbeitsdruck, beispielsweise zwischen 5 bar und 40 bar, auf. Gemäß einem Kerngedanken der Erfindung ist der Aufbau der Thermoregulierungsanordnung 1 derart, dass dieses Druckgefälle als Triebkraft für die Temperieranordnung 30 genutzt wird.

Zu diesem Zweck ist stromab der Reaktionsgasquelle 11 und stromauf der Reaktorvorrichtung/en 14, 14' bzw. der Reaktormaterialien zumindest ein erstes Druck- und/oder Durchflussregulierungsmittel angeordnet. Weiterhin ist stromauf der Reaktionsgassenke 13 und stromab der Reaktorvorrichtung/en 14, 14' zumindest ein zweites Druck- und/oder Durchflussregulierungsmittel angeordnet. Die Druck- und/oder Durchflussregulierungsmittel können beispielsweise, wie in Fig. 1 gezeigt, in den Leitungssträngen stromauf und stromab der Teilleitungsstränge 121, 121', hier in Form eines ersten und eines zweiten Druck-Ventilmittels 15, 15', vorhanden sein. Auf diese Weise lässt sich der Druck aus der Reaktionsgasquelle 11 auf einen jeweiligen Betriebsdruck für die Reaktorvorrichtungen 14, 14' reduzieren. Der Betriebsdruck liegt somit zwischen dem Druck in der Reaktionsgasquelle 11 und dem Arbeitsdruck in der Reaktionsgassenke 13.

Für eine präzise Steuerbarkeit bzw. Regelbarkeit eines Wechsels zwischen Absorptions- und Desorptionsbetrieb sind den Reaktorvorrichtungen 14, 14' vorzugsweise jeweils zumindest ein Sensorelement 16, 16' zur Ermittlung des Betriebsdrucks und/oder einer (Betriebs-)Temperatur zugeordnet. In Fig. 1 sind die Sensorelemente 16, 16' beispielhaft jeweils den Reaktorvorrichtungen 14, 14' zugeordnet, wobei sie stromab derselben in den jeweiligen Teilleitungssträngen 121, 121' angeordnet sind. Möglich wäre auch eine Anordnung an anderer Stelle, beispielsweise innerhalb der Reaktorvorrichtungen 14, 14'.

Zur thermischen Kopplung der Temperieranordnung mit den zu temperierenden Systemen umfasst die Thermoregulierungsanordnung 1 ein Wärmetransportsystem 20. Das Wärmetransportsystem weist Leitungsmittel 21 zur Leitung eines Wärmeträgermediums auf. Das Wärmeträgermedium kann beispielsweise eine Flüssigkeit und/oder ein Gas sein.

Das Wärmetransportsystem 20 weist einen ersten Wärmeträgerkreislauf 211 mit einem ersten Eintritt 22 und einem ersten Austritt 23 auf, um eine Strömungsverbindung zu einer Wärmequelle, insbesondere einem zu kühlenden System, herzustellen. Weiterhin weist das Wärmetransportsystem einen zweiten Wärmeträgerkreislauf 211' mit einem zweiten Eintritt 24 und einem zweiten Austritt 25 auf, um eine Strömungsverbindung zu einer Wärmesenke, insbesondere einem zu beheizenden System oder der Umgebung, herzustellen.

Durch eine entsprechend ausgebildete Ventilanordnung des Wärmetransportsystems kann der erste Wärmeträgerkreislauf 211 wechselweise mit der Reaktorvorrichtung 14 und der Reaktorvorrichtung 14' und gleichzeitig der zweite Wärmeträgerkreislauf 211' mit der jeweils anderen Reaktorvorrichtung 14', 14 zur Wärmeübertragung von dem bzw. in das Reaktionsmaterial in Strömungsverbindung gebracht werden. Der Wechsel der Teilkreisläufe 211, 211' auf die jeweils andere Reaktorvorrichtung 14, 14' erfolgt in einem Wechsel.

Dazu weist die Ventilanordnung des Wärmetransportsystems beispielhaft stromauf der Reaktorvorrichtungen 14, 14' zwei Ventilmittel 26 und 27 auf, die vorzugsweise als Wegeventile, insbesondere 3/2-Wegeventile, ausgebildet sind. An die Ventilmittel 26, 27 sind jeweils die Zuläufe der ersten und der zweiten Teilkreisläufe 211, 211' sowie die Reaktorvorrichtung 14 (an das Ventilmittel 26) bzw. die Reaktorvorrichtung 14' (an das Ventilmittel 27) angeschlossen bzw. gekoppelt. Stromab der Reaktorvorrichtungen 14, 14' sind zwei Ventilmittel 28, 29 vorhanden, an die die Reaktorvorrichtung 14 (an das Ventilmittel 28) bzw. die Reaktorvorrichtung 14' (an das Ventilmittel 29) angeschlossen bzw. gekoppelt sind, sowie jeweils der erste und der zweite Wärmeträgerkreislauf 211, 211'.

Die Thermoregulierungsanordnung 1 wird zyklisch betrieben, wobei kontinuierlich sowohl Kälte als auch Wärme erzeugt werden. Wird lediglich die erzeugte Kälte (z. B. in einer Klimatisierungsanordnung) oder die erzeugte Wärme genutzt, kann die jeweils nicht genutzte Wärme bzw. Kälte zur Regeneration der Reaktorvorrichtung 14, 14' an die Umgebung abgeführt bzw. Wärme aus der Umgebung aufgenommen werden. In einem Halbzyklus wird Reaktionsgas aus der Reaktionsgasquelle 11 in eine der Reaktorvorrichtungen 14 oder 14' geleitet und dort unter Wärmefreisetzung absorbiert. In der jeweils anderen Reaktorvorrichtung 14' oder 14 wird zeitgleich Reaktionsgas unter Wärmeaufnahme aus dem Wärmeträgermedium desorbiert. Das Reaktionsgas wird über die Leitungsmittel 12 der Reaktionsgassenke 13 zugeführt, wo es z. B. energetisch umgesetzt wird. Nach einer Halbzykluszeit von beispielsweise zwischen 30s und 300s, vorzugsweise zwischen 60s und 180s, werden die Reaktorvorrichtungen 14, 14' in einem Wechsel durch entsprechende Umschaltung der Ventilanordnungen in dem Reaktionsgassystem 10 und in dem Wärmetransportsystem 20 umgeschaltet. Nun wird der jeweils anderen Reaktorvorrichtung 14' oder 14 Reaktionsgas aus der Reaktionsgasquelle 11 zugeführt und aus der anderen Reaktorvorrichtung 14 oder 14' Reaktionsgas an die Reaktionsgassenke 13 abgegeben.

Der Wechsel kann beispielsweise in Abhängigkeit von Signalen der vorhandenen Sensorelemente 16, 16' durch eine (hier nicht gezeigte) Steuereinrichtung eingeleitet werden, beispielsweise wenn ein bestimmtes Druck- und/oder Temperaturniveau erreicht ist. Beispielsweise kann der Wechsel eingeleitet werden, sobald der Druck an dem Sensorelement 16 bzw. 16' (je nachdem, welche der Reaktorvorrichtungen 14, 14' mit der Reaktionsgassenke 13 in Strömungsverbindung steht) den Arbeitsdruck bzw. den Versorgungsdruck der Reaktionsgassenke 13 erreicht (oder unterschreitet). Beispielsweise kann die Umschaltung auch eingeleitet werden, wenn ein in der Steuereinrichtung vorgegebener Temperaturhub oder eine Zieltemperatur innerhalb des Wärmeträgermediums nicht mehr erreicht wird.

Vorliegend bildet beispielhaft der erste Wärmeträgerkreislauf 211 einen Kältekreislauf, der an ein oder mehrere zu kühlende/s System/e bzw. Wärmequelle/n (hier nicht gezeigt) angeschlossen ist. Zur "kontinuierlichen Kälteerzeugung" im kontinuierlichen Betrieb wird die Ventilanordnung des Wärmetransportsystems so eingestellt, dass das Wärmeträgermedium über den ersten Eintritt 22 und über das Ventilmittel 26 oder 27 jeweils in die desorbierende, d. h. Wärme aufnehmende, Reaktorvorrichtung 14 oder 14' geleitet wird. Dort gibt das Wärmeträgermedium Wärme an das Reaktionsmaterial ab und wird so gekühlt. Stromab der Reaktorvorrichtung 14 oder 14' wird das Wärmeträgermedium über das Ventilmittel 28 oder 29 dem ersten Austritt 23 zugeführt.

Der zweite Wärmeträgerkreislauf 211' bildet beispielhaft einen Wärmekreislauf, der an ein oder mehrere zu erwärmende/s System/e oder die Umgebung als Wärmesenke/n (hier nicht gezeigt) angeschlossen ist. Zur "kontinuierlichen Wärmeerzeugung" im kontinuierlichen Betrieb wird die Ventilanordnung des Wärmetransportsystems so eingestellt, dass das Wärmeträgermedium über den zweiten Eintritt 24 und über das Ventilmittel 27 oder 26 jeweils an die absorbierende, d.h. wärmeabgebende, Reaktorvorrichtung 14' oder 14 geleitet wird. Dort nimmt das Wärmeträgermedium Wärme aus dem Reaktormaterial auf und wird so erwärmt. Stromab der Reaktorvorrichtung 14' oder 14 wird das Wärmeträgermedium über das Ventilmittel 29 oder 28 dem zweiten Austritt 25 zugeführt.

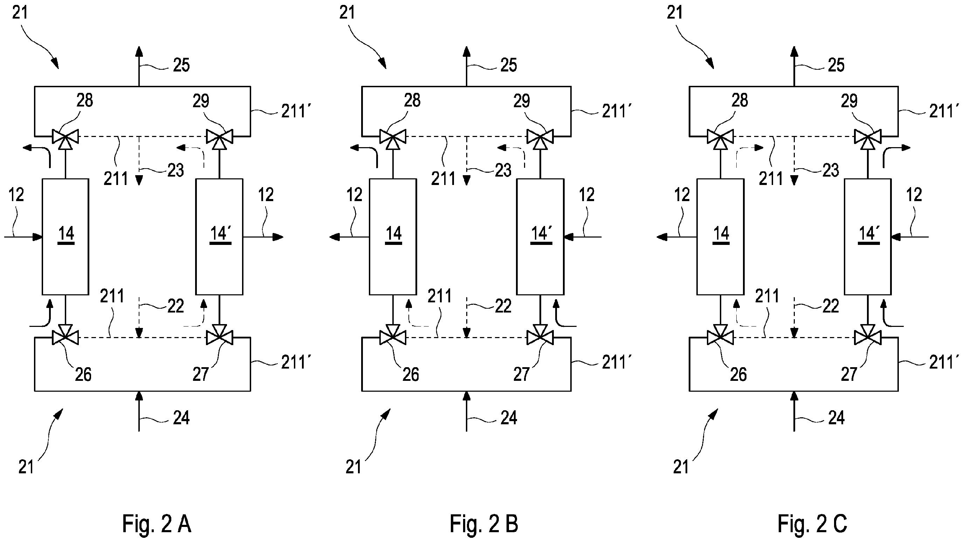

Zur Steigerung der Effizienz der Thermoregulierungsanordnung 1 werden die Ventilmittel 26, 27 bei dem Wechsel asynchron zu den Ventilmitteln 28, 29 geschaltet. Die einzelnen Schritte des Wechsels sind in Fig. 2 A-C schematisch gezeigt, wobei die Darstellung vereinfachend weitgehend auf die Reaktorvorrichtungen 14, 14' und die Wärmeträgerkreisläufe 211, 211' mit der Ventilanordnung reduziert ist. Die Strömungsrichtungen des Wärmeträgermediums sind durch Pfeile angedeutet.

Fig. 2A zeigt den Strömungsverlauf in dem ersten Halbzyklus. Dabei strömt über die Leitungsmittel 21 und die Ventilmittel 26, 27 warmes Wärmeträgermedium (durchgezogene Pfeile) aus dem zweiten Wärmeträgerkreislauf 211' (durchgezogene Linie) in die Reaktorvorrichtung 14 und kaltes Wärmeträgermedium (gestrichelte Pfeile) aus dem ersten Wärmeträgerkreislauf 211 (gestrichelte Linie) in die Reaktorvorrichtung 14' ein. Über die stromab angeordneten Ventilmittel 28, 29 werden die erwärmten bzw. abgekühlten Ströme der Wärmeträgermedien wieder den entsprechenden Wärmeträgerkreisläufen 211, 211' zugeleitet.

Bei dem Wechsel werden nach dem Halbzyklus zunächst die Ventilmittel 26, 27 stromauf der Reaktorvorrichtungen 14, 14' umgeschaltet (vgl. Fig. 2 B). Erst nach einer Umschaltzeit werden die Ventilmittel 28, 29 stromab der Reaktorvorrichtungen 14' umgeschaltet. Die sich dadurch ergebende Strömungsführung während der Umschaltzeit (d. h. während des Wechsels) ist in Fig. 2 B dargestellt. Die Umschaltzeit entspricht z. B. in etwa der Durchströmzeit des Wärmeträgermediums von den stromauf angeordneten Ventilmitteln 26, 27 zu den stromab angeordneten Ventilmitteln 28, 29. So ist die Umschaltzeit unter Kenntnis des Massen- bzw. Volumenstroms und des durchströmten Volumens zwischen den jeweiligen Ventilmitteln ermittelbar. Die Umschaltzeit kann, je nach System und Volumenstrom des Wärmeträgermediums, mehrere Sekunden, beispielsweise zwischen 5s und 30s betragen.

Fig. 2C zeigt den Strömungsverlauf in dem zweiten Halbzyklus, nach dem Wechsel bzw. Umschaltvorgang. Nun strömt über die Leitungsmittel 21 und die Ventilmittel 26, 27 warmes Wärmeträgermedium (durchgezogene Pfeile) aus dem zweiten Wärmeträgerkreislauf 211' (durchgezogene Linie) in die Reaktorvorrichtung 14' und kaltes Wärmeträgermedium (gestrichelte Pfeile) aus dem ersten Wärmeträgerkreislauf 211 (gestrichelte Linie) in die Reaktorvorrichtung 14 ein. Über die stromab angeordneten Ventilmittel 28, 29 werden die erwärmten bzw. abgekühlten Ströme der Wärmeträgermedien wieder den entsprechenden Wärmeträgerkreisläufen 211, 211' zugeleitet.

Durch die asynchrone Ventilschaltung während des Wechsels zwischen den Halbzyklen kann jeweils das restliche Volumen an Wärmeträgermedium, welches sich zwischen den stromauf angeordneten Ventilmitteln 26, 27 und den stromab angeordneten Ventilmittel 28, 29 befindet, in den entsprechenden Wärmeträgerkreislauf 211, 211' abströmen, aus dem es in die Reaktorvorrichtung 14, 14' eingeströmt ist. Erst nach dem Abströmen werden auch die stromab angeordneten Ventilmittel 28, 29 auf den anderen Wärmeträgerkreislauf 211', 211 (oder umgekehrt) umgeschaltet. Dadurch wird verhindert, dass ein Restvolumenstrom an kaltem bzw. warmem Wärmeträgermedium in jeweils den anderen Wärmeträgerkreislauf 211', 211, d.h. den warmen bzw. kalten Wärmeträgerkreislauf 211', 211 (oder umgekehrt) einströmt und dort eine unerwünschte Abkühlung bzw. Erwärmung bewirkt.

Während der Umschaltzeit kann die Absorption bzw. Reaktionsgasaufnahme in dem Reaktionsmaterial gestoppt werden, z. B. durch Unterbrechung der Strömungsverbindung des Reaktionsgases zu den Reaktorvorrichtungen 14, 14'. Die Reaktionsgassenke 13 kann, falls erforderlich, dabei über einen Bypassabschnitt 122 (vgl. Fig. 1) mit Reaktionsgas versorgt werden. Somit kann verhindert werden, dass warmes bzw. kaltes Wärmeträgermedium, welches bereits aus einem umgeschalteten Wärmeträgerkreislauf 211', 211 nachströmt, unerwünschter Weise mit Kälte bzw. Wärme innerhalb der jeweiligen Reaktorvorrichtung 14, 14' beaufschlagt wird.

Das Prinzip des asynchronen Wechsels, z. B. durch die asynchrone Ventilschaltung, wie anhand der Fig. 2A-C beschrieben, kann auch bei anderen Systemkonfigurationen als bei der in Fig. 1 gezeigten Thermoregulierungsanordnung 1 basierend auf einer thermochemischen Reaktion äußerst vorteilhaft angewandt werden. Untersuchungen der Erfinder haben gezeigt, dass durch den asynchronen Wechsel die Effizienz der Thermoregulierungsanordnung 1 erheblich gesteigert wird.

## Patentansprüche

1. Verfahren zum Betreiben einer Thermoregulierungsanordnung (1) zur Temperierung eines mit der Thermoregulierungsanordnung (1) in thermischem Kontakt stehenden Systems, das insbesondere innerhalb eines Fahrzeugs angeordnet ist,
bei dem in einem Reaktionsgassystem (10) Reaktionsgas von einer Reaktionsgasquelle (11) unter Zwischenschaltung einer Temperieranordnung (30) in eine Reaktionsgassenke (13) geleitet wird,
wobei in der in dem Reaktionsgassystem (10) angeordneten Temperieranordnung (30) in zumindest einer Reaktorvorrichtung (14, 14') mit Reaktionsmaterial in einem Absorptionsbetrieb Wärme und anschließend in einem Desorptionsbetrieb Kälte erzeugt wird oder umgekehrt, wobei in dem Absorptionsbetrieb Reaktionsgas von dem Reaktionsmaterial unter Wärmeabgabe absorbiert wird und in dem Desorptionsbetrieb Reaktionsgas von dem Reaktionsmaterial unter Wärmeaufnahme desorbiert wird, und
wobei die zumindest eine Reaktorvorrichtung (14, 14') von einem Wärmeträgermedium zur Aufnahme der erzeugten Wärme oder Kälte durchströmt wird, wobei im Desorptionsbetrieb ein erster Wärmeträgerkreislauf (211) und im Absorptionsbetrieb ein zweiter Wärmeträgerkreislauf (211'), mit einer anderen, vorzugsweise höheren, Austrittstemperatur des Wärmeträgermediums aus der Reaktorvorrichtung (14, 14') als in dem ersten Wärmeträgerkreislauf (211), mit der Reaktorvorrichtung (14, 14') in Strömungsverbindung steht,
wobei bei einem Wechsel von dem Absorptionsbetrieb auf den Desorptionsbetrieb oder umgekehrt die Strömungsverbindung der Reaktorvorrichtung (14, 14') mit dem zweiten Wärmeträgerkreislauf (211') auf den ersten Wärmeträgerkreislauf (211) umgeschaltet wird oder umgekehrt, wobei zunächst eine Strömungsverbindung stromauf der Reaktorvorrichtung (14, 14') auf den anderen Wärmeträgerkreislauf (211, 211') umgeschaltet wird und nach einer Umschaltzeit die Strömungsverbindung stromab der Reaktorvorrichtung (14, 14') auf diesen anderen Wärmeträgerkreislauf (211, 211') umgeschaltet wird, wobei die Umschaltzeit in Abhängigkeit einer Durchströmzeit des Wärmeträgermediums durch zumindest die Reaktorvorrichtung (14, 14') ermittelt wird.

2. Verfahren nach Anspruch 1,
wobei die Umschaltzeit der Durchströmzeit entspricht.

3. Verfahren nach Anspruch 1 oder 2,
wobei während der Umschaltzeit die Strömung des Reaktionsgases durch die Reaktorvorrichtung (14, 14') unterbrochen wird.

4. Verfahren nach einem der vorhergehenden Ansprüche,
wobei bei dem Wechsel in den Wärmeträgerkreisläufen (211, 211') vorhandene Ventilmittel (26, 27, 28, 29) zumindest teilweise mit der Umschaltzeit versetzt zueinander umgeschaltet werden, wobei zunächst ein erstes Ventilmittel (26, 27) stromauf der Reaktorvorrichtung (14, 14') umgeschaltet wird und nach der Umschaltzeit ein zweites Ventilmittel (28, 29) stromab der Reaktorvorrichtung (14, 14') umgeschaltet wird.

5. Verfahren nach einem der vorhergehenden Ansprüche,
wobei der Wechsel zwischen dem Absorptionsbetrieb und dem Desorptionsbetrieb in Abhängigkeit von Betriebsgrößen, insbesondere eines Drucks und/oder einer Temperatur, eingeleitet wird, wobei ein anderer Betriebsdruck an die Reaktorvorrichtung (14, 14') angelegt wird.

6. Verfahren nach einem der vorhergehenden Ansprüche,
wobei ein jeweiliger Betriebsdruck in der Reaktorvorrichtung (14, 14') und/oder die Reaktionsgas-Massenströme zu bzw. von der Reaktorvorrichtung (14, 14') in Abhängigkeit von Randbedingungen, insbesondere einer erforderlichen Temperatur des Wärmeträgermediums und/oder einer erforderlichen thermischen Leistung, eingestellt wird.

7. Verfahren nach einem der vorhergehenden Ansprüche,
wobei zumindest zwei Reaktorvorrichtungen (14, 14') vorhanden sind, die zyklisch zueinander versetzt wechselweise im Absorptionsbetrieb und im Desorptionsbetrieb betrieben werden.

8. Verfahren nach Anspruch 7,
wobei in einem Halbzyklus eine der Reaktorvorrichtungen (14, 14') im Absorptionsbetrieb betrieben wird, wobei Reaktionsgas aus der Reaktionsgasquelle (11) zur Absorption in die jeweilige Reaktorvorrichtung (14, 14') geleitet wird und die abgegebene Wärme von dem Wärmeträgermedium aufgenommen wird, und die jeweils andere Reaktorvorrichtung (14', 14) im Desorptionsbetrieb betrieben wird, wobei Reaktionsgas aus der Reaktorvorrichtung (14', 14) in die Reaktionsgassenke (13) geleitet wird, wobei Wärme aus dem Wärmeträgermedium aufgenommen und so das Wärmeträgermedium abgekühlt wird, und dass nach einer Halbzykluszeit in dem Wechsel die Strömungsverbindungen des Reaktionsgases und des Wärmeträgermediums umgeschaltet werden und anschließend in dem anderen Halbzyklus die jeweils anderen Reaktorvorrichtungen (14', 14) im Absorptionsbetrieb und im Desorptionsbetrieb betrieben werden.

9. Thermoregulierungsanordnung (1) zur Temperierung eines damit in thermischem Kontakt stehenden Systems, insbesondere innerhalb eines Fahrzeugs, umfassend ein Reaktionsgassystem (10), eine Reaktionsgasquelle (11), eine Temperieranordnung (30), eine Reaktionsgassenke (13), zumindest eine Reaktorvorrichtung (14, 14') mit Reaktionsmaterial, ein erster Wärmeträgerkreislauf (211) und ein zweiter Wärmeträgerkreislauf (211'), wobei die Thermoregulierungsanordnung (1) derart ausgebildet ist, dass im Reaktionsgassystem (10) Reaktionsgas von der Reaktionsgasquelle (11) unter Zwischenschaltung der Temperieranordnung (30) in die Reaktionsgassenke (13) geleitet wird, wobei in der in dem Reaktionsgassystem (10) angeordneten Temperieranordnung (30) in zumindest der einen Reaktorvorrichtung (14, 14') in einem Absorptionsbetrieb Wärme und anschließend in einem Desorptionsbetrieb Kälte erzeugt wird oder umgekehrt, wobei in dem Absorptionsbetrieb Reaktionsgas von dem Reaktionsmaterial unter Wärmeabgabe absorbiert wird und in dem Desorptionsbetrieb Reaktionsgas von dem Reaktionsmaterial unter Wärmeaufnahme desorbiert wird, und wobei die zumindest eine Reaktorvorrichtung (14, 14') von einem Wärmeträgermedium zur Aufnahme der erzeugten Wärme oder Kälte durchströmt wird, wobei im Desorptionsbetrieb der erste Wärmeträgerkreislauf (211) und im Absorptionsbetrieb der zweite Wärmeträgerkreislauf (211'), mit einer anderen, vorzugsweise höheren, Austrittstemperatur des Wärmeträgermediums aus der Reaktorvorrichtung (14, 14') als in dem ersten Wärmeträgerkreislauf (211), mit der Reaktorvorrichtung (14, 14') in Strömungsverbindung steht, und umfassend eine Steuereinrichtung mit einer entsprechenden Steuerung, die dazu ausgebildet ist, ein Verfahren nach einem der vorhergehenden Ansprüche durchzuführen.

10. Thermoregulierungsanordnung (1) nach Anspruch 9,
wobei das Reaktionsmaterial einen Feststoff aufweisend ein Metallhydrid, insbesondere eine Titan-Mangan-Legierung, umfasst und/oder dass das Reaktionsgas durch Wasserstoff gebildet ist.

11. Fahrzeug mit einer Thermoregulierungsanordnung (1) nach Anspruch 9 oder 10, mit zumindest einem mit der Thermoregulierungsanordnung (1) in thermischem Kontakt stehenden zu temperierenden System.

## Claims

1. Method for operating a thermoregulation arrangement (1) for controlling the temperature of a system which is in thermal contact with the thermoregulation arrangement (1) and is arranged in particular inside a vehicle,
in which method, in a reaction gas system (10), reaction gas is conducted from a reaction gas source (11) into a reaction gas sink (13), which have a temperature control arrangement (30) connected therebetween,
wherein, in the temperature control arrangement (30) arranged in the reaction gas system (10), in at least one reactor device (14, 14') comprising reaction material, heat is generated in an absorption mode and then cold is generated in a desorption mode or vice versa, wherein, in the absorption mode, reaction gas is absorbed from the reaction material while releasing heat and, in the desorption mode, reaction gas is desorbed from the reaction material while absorbing heat, and
wherein a heat transfer medium for absorbing the generated heat or cold flows through the at least one reactor device (14, 14'), wherein, in the desorption mode, a first heat transfer circuit (211) and, in the absorption mode, a second heat transfer circuit (211') having a different, preferably higher, outlet temperature of the heat transfer medium from the reactor device (14, 14') than in the first heat transfer circuit (211) is fluidically connected to the reactor device (14, 14'),
wherein
when changing from the absorption mode to the desorption mode or vice versa, the fluid connection of the reactor device (14, 14') with the second heat transfer circuit (211') is switched over to the first heat transfer circuit (211) or vice versa, wherein a fluid connection upstream of the reactor device (14, 14') is firstly switched over to the other heat transfer circuit (211, 211') and, after a switchover time, the fluid connection downstream of the reactor device (14, 14') is switched over to this other heat transfer circuit (211, 211'), wherein the switchover time is determined depending on a through-flow time of the heat transfer medium through at least the reactor device (14, 14').

2. Method according to claim 1,
wherein
the switchover time corresponds to the through-flow time.

3. Method according to either claim 1 or claim 2,
wherein
the flow of the reaction gas through the reactor device (14, 14') is interrupted during the switchover time.

4. Method according to any of the preceding claims,
wherein
during the change, valve means (26, 27, 28, 29) present in the heat transfer circuits (211, 211') are at least partially switched relative to one another with the switching time offset, wherein a first valve means (26, 27) upstream of the reactor device (14, 14') is firstly switched over and, after the switchover time, a second valve means (28, 29) downstream of the reactor device (14, 14') is switched over.

5. Method according to any of the preceding claims,
wherein
the change between the absorption mode and the desorption mode is initiated depending on operating variables, in particular a pressure and/or a temperature, wherein a different operating pressure is applied to the reactor device (14, 14').

6. Method according to any of the preceding claims,
wherein
a particular operating pressure in the reactor device (14, 14') and/or the reaction gas mass flows to or from the reactor device (14, 14') are adjusted depending of boundary conditions, in particular a required temperature of the heat transfer medium and/or a required thermal output.

7. Method according to any of the preceding claims,
wherein
at least two reactor devices (14, 14') are present which are operated alternately in absorption mode and in desorption mode in a manner cyclically offset relative to one another.

8. Method according to claim 7,
wherein
in a half-cycle, one of the reactor devices (14, 14') is operated in the absorption mode, wherein reaction gas from the reaction gas source (11) is conducted into the relevant reactor device (14, 14') for absorption and the heat given off is absorbed by the heat transfer medium, and the other reactor device (14', 14) is operated in the desorption mode, wherein reaction gas is conducted from the reactor device (14', 14) into the reaction gas sink (13), wherein heat is absorbed from the heat transfer medium and the heat transfer medium is thus cooled, and, after a half-cycle time, in the change, the fluid connections of the reaction gas and the heat transfer medium are switched over, and then in the other half-cycle, the other reactor devices (14', 14) are operated in the absorption mode and in the desorption mode.

9. Thermoregulation arrangement (1) for controlling the temperature of a system that is in thermal contact therewith, in particular inside a vehicle, comprising a reaction gas system (10), a reaction gas source (11), a temperature control arrangement (30), a reaction gas sink (13), at least one reactor device (14, 14') comprising reaction material, a first heat transfer circuit (211), and a second heat transfer circuit (211'), wherein the thermoregulation arrangement (1) is designed in such a way that, in the reaction gas system (10), reaction gas is conducted from the reaction gas source (11) into the reaction gas sink (13), which have the temperature control arrangement (30) connected therebetween, wherein, in the temperature control arrangement (30) arranged in the reaction gas system (10), in at least one reactor device (14, 14'), heat is generated in an absorption mode and then cold is generated in a desorption mode or vice versa, wherein, in the absorption mode, reaction gas is absorbed from the reaction material while releasing heat and, in the desorption mode, reaction gas is desorbed from the reaction material while absorbing heat, and wherein a heat transfer medium for absorbing the generated heat or cold flows through the at least one reactor device (14, 14'), wherein, in the desorption mode, the first heat transfer circuit (211) and, in the absorption mode, the second heat transfer circuit (211') having a different, preferably higher, outlet temperature of the heat transfer medium from the reactor device (14, 14') than in the first heat transfer circuit (211) is fluidically connected to the reactor device (14, 14'), and comprising a control device having a corresponding controller which is designed to carry out a method according to any of the preceding claims.

10. Thermoregulation arrangement (1) according to claim 9,
wherein
the reaction material comprises a solid comprising a metal hydride, in particular a titanium-manganese alloy, and/or the reaction gas is formed by hydrogen.

11. Vehicle comprising a thermoregulation arrangement (1) according to either claim 9 or claim 10, comprising at least one system to be temperature-controlled which is in thermal contact with the thermoregulation arrangement (1).

## Revendications

1. Procédé permettant de faire fonctionner un agencement de thermorégulation (1) permettant la régulation de température d'un système en contact thermique avec l'agencement de thermorégulation (1) et disposé en particulier à l'intérieur d'un véhicule,
dans lequel, dans un système de gaz de réaction (10), du gaz de réaction est conduit depuis une source de gaz de réaction (11) dans un puits de gaz de réaction (13) avec interposition d'un agencement de régulation de température (30),
dans lequel, dans l'agencement de régulation de température (30) disposé dans le système de gaz de réaction (10), dans au moins un dispositif de réacteur (14, 14') comportant un matériau de réaction, de la chaleur est générée dans un mode d'absorption puis du froid est généré dans un mode de désorption ou inversement, dans le mode d'absorption, du gaz de réaction étant absorbé par le matériau de réaction avec dégagement de chaleur et, dans le mode de désorption, du gaz de réaction étant désorbé du matériau de réaction avec absorption de chaleur, et
dans lequel l'au moins un dispositif de réacteur (14, 14') est traversé par un fluide caloporteur pour l'absorption de la chaleur ou du froid généré, dans le mode de désorption, un premier circuit caloporteur (211) étant en liaison par écoulement avec le dispositif de réacteur (14, 14') et, dans le mode d'absorption, un second circuit caloporteur (211') étant en liaison par écoulement avec ledit dispositif de réacteur, avec une température de sortie du fluide caloporteur hors du dispositif de réacteur (14, 14') différente, de préférence plus élevée, que dans le premier circuit caloporteur (211),
dans lequel
lors d'un passage du mode d'absorption vers le mode de désorption ou inversement, la liaison par écoulement du dispositif de réacteur (14, 14') avec le second circuit caloporteur (211') est commutée vers le premier circuit caloporteur (211) ou inversement, une liaison par écoulement en amont du dispositif de réacteur (14, 14') étant d'abord commutée vers l'autre circuit caloporteur (211, 211') et, après un temps de commutation, la liaison par écoulement en aval du dispositif de réacteur (14, 14') étant commutée vers ledit autre circuit caloporteur (211, 211'), le temps de commutation étant déterminé en fonction d'un temps d'écoulement du fluide caloporteur à travers au moins le dispositif de réacteur (14, 14').

2. Procédé selon la revendication 1,
dans lequel
le temps de commutation correspond au temps d'écoulement.

3. Procédé selon la revendication 1 ou 2,
dans lequel
l'écoulement du gaz de réaction à travers le dispositif de réacteur (14, 14') est interrompu pendant le temps de commutation.

4. Procédé selon l'une des revendications précédentes,
dans lequel
lors du passage, des moyens de soupape (26, 27, 28, 29) prévus dans les circuits caloporteurs (211, 211') sont au moins partiellement commutés de manière décalée les uns par rapport aux autres avec le temps de commutation, un premier moyen de soupape (26, 27) en amont du dispositif de réacteur (14, 14') étant d'abord commuté et, après le temps de commutation, un second moyen de soupape (28, 29) en aval du dispositif de réacteur (14, 14') étant commuté.

5. Procédé selon l'une des revendications précédentes,
dans lequel
le passage entre le mode d'absorption et le mode de désorption est lancé en fonction de grandeurs de fonctionnement, en particulier d'une pression et/ou d'une température, une pression de fonctionnement différente étant appliquée au dispositif de réacteur (14, 14').

6. Procédé selon l'une des revendications précédentes,
dans lequel
une pression de fonctionnement respective dans le dispositif de réacteur (14, 14') et/ou
les débits massiques de gaz de réaction vers ou depuis le dispositif de réacteur (14, 14') sont réglés en fonction de conditions limites, en particulier d'une température requise du fluide caloporteur et/ou d'une puissance thermique requise.

7. Procédé selon l'une des revendications précédentes,
dans lequel
au moins deux dispositifs de réacteur (14, 14') sont prévus, lesquels sont décalés cycliquement l'un de l'autre et fonctionnent alternativement dans le mode d'absorption et dans le mode de désorption.

8. Procédé selon la revendication 7,
dans lequel
dans un demi-cycle, l'un des dispositifs de réacteur (14, 14') fonctionne dans le mode d'absorption, du gaz de réaction étant conduit depuis la source de gaz de réaction (11) dans le dispositif de réacteur (14, 14') respectif pour l'absorption et la chaleur dégagée étant absorbée par le fluide caloporteur, et l'autre dispositif de réacteur (14', 14) respectif fonctionnant dans le mode de désorption, du gaz de réaction étant conduit hors du dispositif de réacteur (14', 14) dans le puits de gaz de réaction (13), de la chaleur étant absorbée hors du fluide caloporteur et le fluide caloporteur étant ainsi refroidi, et après un temps de demi-cycle, les liaisons par écoulement du gaz de réaction et du fluide caloporteur étant commutées en alternance, puis, dans l'autre demi-cycle, les autres dispositifs de réacteur (14', 14) respectifs fonctionnant dans le mode d'absorption et dans le mode de désorption.

9. Agencement de thermorégulation (1) permettant la régulation de température d'un système en contact thermique avec celui-ci, en particulier à l'intérieur d'un véhicule,
comprenant un système de gaz de réaction (10), une source de gaz de réaction (11), un agencement de régulation de température (30), un puits de gaz de réaction (13), au moins un dispositif de réacteur (14, 14') comportant un matériau de réaction, un premier circuit caloporteur (211) et un second circuit caloporteur (211'), l'agencement de thermorégulation (1) étant conçu de telle manière que, dans le système de gaz de réaction (10), du gaz de réaction est conduit depuis la source de gaz de réaction (11) dans le puits de gaz de réaction (13) avec interposition de l'agencement de régulation de température (30), dans l'agencement de régulation de température (30) disposé dans le système de gaz de réaction (10), dans l'au moins un dispositif de réacteur (14, 14'), de la chaleur étant générée dans un mode d'absorption puis du froid étant généré dans un mode de désorption ou inversement, dans le mode d'absorption, du gaz de réaction étant absorbé par le matériau de réaction avec dégagement de chaleur et, dans le mode de désorption, du gaz de réaction étant désorbé du matériau de réaction avec absorption de chaleur, et l'au moins un dispositif de réacteur (14, 14') étant traversé par un fluide caloporteur pour l'absorption de la chaleur ou du froid généré, dans le mode de désorption, le premier circuit caloporteur (211) étant en liaison par écoulement avec le dispositif de réacteur (14, 14') et, dans le mode d'absorption, le second circuit caloporteur (211') étant en liaison par écoulement avec ledit dispositif de réacteur, avec une température de sortie du fluide caloporteur hors du dispositif de réacteur (14, 14') différente, de préférence plus élevée, que dans le premier circuit caloporteur (211), et comprenant un appareil de commande comportant une commande correspondante qui est configuré pour exécuter un procédé selon l'une des revendications précédentes.

10. Agencement de thermorégulation (1) selon la revendication 9,
dans lequel
le matériau de réaction comprend une matière solide présentant un hydrure métallique, en particulier un alliage titane-manganèse, et/ou le gaz de réaction est formé par de l'hydrogène.

11. Véhicule comportant un agencement de thermorégulation (1) selon la revendication 9 ou 10, comportant au moins un système à réguler en température en contact thermique avec l'agencement de thermorégulation (1).
